# EUROPEAN PATENT APPLICATION

(11) **EP 4 586 137 A1**
(43) Date of publication of application: **16.07.2025**
(21) Application number: 24151659.0
(22) Date of filing: 12.01.2024
(51) Int. Cl.: G06K 19/06

(54) **IDENTIFICATION DOCUMENT WITH ANTENNA HAVING A SECURITY PORTION**

(71) Applicant: HID Global Ireland Teoranta, Galway H91 FKF1 (IE)
(72) Inventor: CLOHERTY, Crystal, Co. Galway, H91 NR70 (IE)
(74) Representative: Kramer Barske Schmidtchen Patentanwälte PartG mbB

(57) **Abstract**

An identification document such as a passport or an identity card, the identification document having a substrate (1), a portrait portion (15), and an antenna (20). The substrate (1) has a front side (FS) and a backside (BS) opposite to the front side (FS) in a thickness direction (d) of the substrate (1). The portrait portion (15) has a main portrait of the identification document's holder. The antenna (20) is embedded in the substrate (1). A security portion (19) of the antenna (20) is positioned between the portrait portion (15) and the backside (BS) of the substrate (1) and overlaps with the portrait portion (15).

## Description

### Technical Field

The present disclosure generally relates to identification documents. In particular, the present disclosure relates to an identification document having an antenna with a security portion and a method for manufacturing an identification document having an antenna with a security portion.

### Background

The use of identification documents in modern society is extensive. Identification documents are used for, among other things, proving identity or verifying age. Examples of identification documents include identity cards and passports, both of which are official governmental documents that certify the personal identity of its holder.

Identification documents include indicia of identification (identification features) of the document holder such as the full name, the photograph, the date of birth or the signature of the document holder.

Further, identification documents include security features such as laser engraving/personalization, holograms or security printing, among others. Security features verify the authenticity of the identification document and prevent forgers from modifying or altering genuine identity documents.

Identification documents often include an integrated circuit (chip) and an antenna connected to the integrated circuit. The integrated circuit is configured to store personal information of the document's holder and the antenna is configured to allow wireless communication between the integrated circuit and associated (external) reader devices. By wirelessly communicating with the reader device, the personal information stored on the integrated circuit may be read by the reader device. Such integrated circuit and the associated reader devices may be integrated with high security mechanisms in order to prevent any forceful skimming of data contained on the integrated circuit. Wireless communication may be performed by RFID communication.

A passport usually has a page providing most of the identification features of the document holder. That page is usually referred to as the datapage of the passport. In an identity card, the identification features of the document holder are provided on the identity card itself.

In both cases (the passport and the identity card), (most of) the identification features are usually provided on a substrate which may be formed of multiple layers such as Polycarbonate (PC) layers stacked on each other. The side of the substrate that holds the main portrait (primary portrait) and (most of) the other personal identification details is usually referred to as the "frontside" of the substrate. The side of the substrate that is on the reverse side of the "frontside" is usually referred to as the "backside" of the substrate.

Forgers attempt to modify (alter) genuine identity documents such that incorrect information is presented on the identity document, and so can be used by an individual that is not the entitled holder of the identity document.

One method that forgers use is an attack from the backside of the substrate including (most of) the identification features. This method involves an attack on the holder's main portrait. The forger uses milling, drilling, sanding, or a combination of these methods to access, alter, and or remove the main portrait of the holder from the backside of the substrate. This leaves the front side of the substrate with all the associated identification features intact but allows a forger to modify or replace the main portrait by means of printing or other methods. The altered substrate is then patched, for example with layers of polycarbonate, and possibly including layers with a similar printing pattern to the original, and then laminated. The backside of the substrate may not be examined by border authorities or others, and so any indication of forgery may remain undetected.

The present disclosure is directed, at least in part, to improving or overcoming one or more aspects of prior systems.

### Summary of the Disclosure

According to one aspect, the present disclosure provides an identification document. The identification document has a substrate having a front side and a backside opposite to the front side in a thickness direction of the substrate. The identification document further has a portrait portion and an antenna. The portrait portion has a main portrait of the identification document's holder and is located in the substrate such that the main portrait is at least partly visible from the front side. The antenna is embedded in the substrate and is configured to be coupled to an integrated circuit and to wirelessly communicate with a reader device. A security portion of the antenna is positioned between the portrait portion and the backside of the substrate and overlaps with the portrait portion.

In another aspect, the present disclosure provides a method for manufacturing an identification document. The method includes providing a substrate having a front side and a backside opposite to the front side in a thickness direction of the substrate, providing a portrait portion having a main portrait of the identification document's holder, and locating the portrait portion in the substrate such that the main portrait is at least partly visible from the front side. Further, the method includes the step of embedding an antenna in the substrate, the antenna being configured to be coupled to an integrated circuit and to wirelessly communicate with a reader device. Further, the method includes the step of positioning the antenna in the substrate such that a security portion of the antenna is positioned between the portrait portion and the backside of the substrate and overlaps with the portrait portion.

Other features and aspects of the present disclosure will be apparent from the following description and the accompanying drawings.

### Brief Description of the Drawings

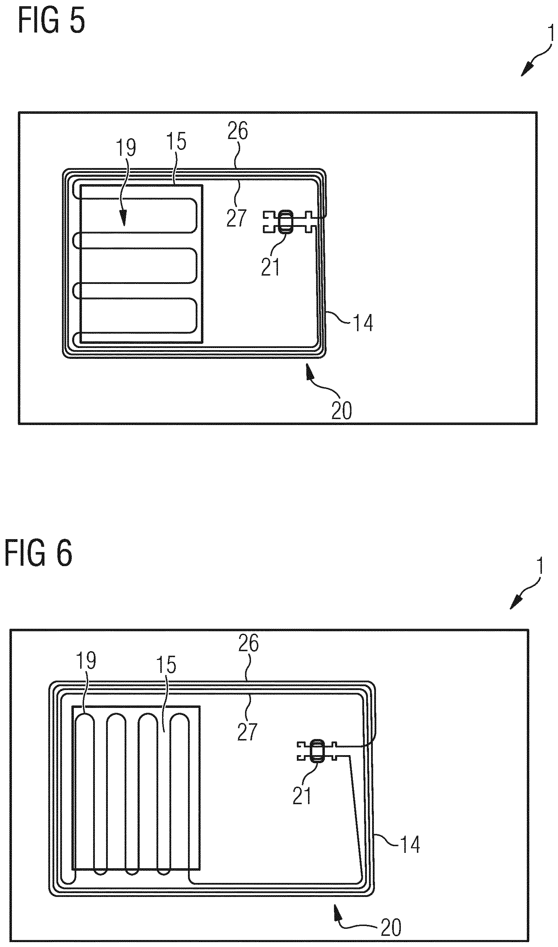

Fig. 1 shows a substrate 1 of an identification document according to an exemplary first embodiment in a sectional view from the side.
Fig. 2 shows a substrate 1 of an identification document according to an exemplary second embodiment in a sectional view from the side.
Fig. 3 shows a substrate 1 of an identification document according to an exemplary third embodiment in a sectional view from the side.
Fig. 4 shows a substrate 1 of an identification document according to an exemplary fourth embodiment in a sectional view from the side.
Each of Fig. 5-12 schematically illustrates a substrate 1 of an identification document according to the present disclosure in a view from the backside of the substrate 1. The antenna 20 and the portrait portion 15 are displayed in a superimposed manner to illustrate the relative position of the antenna 20 to the portrait portion 15.

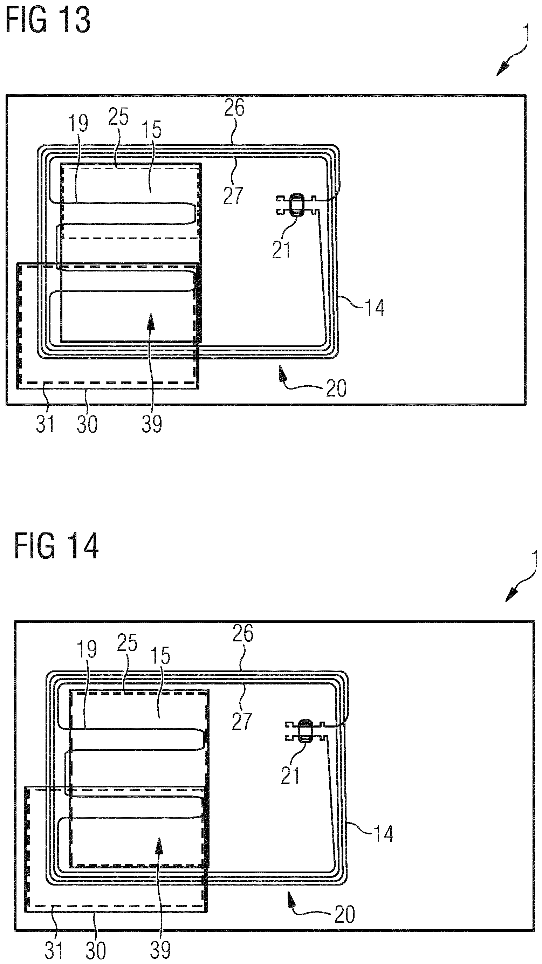

Fig. 13 schematically shows a substrate 1 of an identification document according to a further exemplary embodiment in a view from the backside of the substrate 1, the substrate comprising a first and second transparent window, the first and second transparent window not overlapping with each other when viewed in thickness direction.
Fig. 14 schematically shows a substrate 1 of an identification document according to a further exemplary embodiment in a view from the backside of the substrate 1, the substrate comprising a first and second transparent window, the first and second transparent window overlapping with each other when viewed in thickness direction.

### Detailed Description

The following is a detailed description of exemplary embodiments of the present disclosure. The exemplary embodiments described herein are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of protection. Rather, the scope of protection shall be defined by the appended claims.

The present disclosure refers to identification documents comprising a substrate, a portrait portion and an antenna. The identification document may for example be a passport or an identity card. The portrait portion has the main portrait of the document's holder. The main portrait (also referred to as primary portrait) is a crucial link between identification document and its holder and shows a facial portrait of the document's holder or at least part of the face of the document's holder. The holder's portrait may be repeated in several places in the substrate to validate (secure) the main portrait. The substrate may for example have a secondary portrait which becomes visible as a holographic image beside the main portrait (primary portrait) when viewed at a flat angle. Another example is a tertiary portrait which is a changeable laser image positioned. Depending on the viewing angle, the portrait of the holder becomes visible in the tertiary portrait.

The antenna is configured to wirelessly communicate with an (external) reader device. Examples for wireless communication technologies are RFID, Bluetooth or NFC. The antenna is configured to be coupled to an integrated circuit. The integrated circuit may be positioned in the substrate or may be positioned at a different location from the substrate such as for example another page of a passport, wherein the substrate is part of the passport.

The present disclosure is based at least in part on the realization that the antenna does not only function as communication means but also functions as a security means for the main portrait. This new security function of the antenna is achieved by positioning the antenna and the portrait portion in the substrate such that the antenna has a portion (security portion) that is positioned between the portrait portion and the backside of the substrate and overlaps with the portrait portion. The security portion may correspond to a part of the antenna or may correspond to the entire antenna. In other words, the antenna and the portrait portion according to this disclosure are positioned in the substrate such that the antenna has a portion (security portion) that is positioned underneath (behind) the portrait portion when viewed from the frontside of the substrate in the thickness direction of the substrate (when looking perpendicular at the main portrait). Or in other words, the antenna and the portrait portion are positioned in the substrate such that the antenna has a portion that overlaps with the portrait portion when viewed from the backside of the substrate in thickness direction of the substrate (i.e., the viewing direction corresponds to the thickness direction of the substrate).

It has to be noted that the statement, "... viewed from the frontside/backside" does not mean that the antenna is visible to the naked eye. In an exemplary embodiment a portion of the antenna might be visible for an observer, but this is not mandatory. The said statement shall describe the orientation of the overlap of at least a part of the antenna and the portrait portion only.

When forgers try to manipulate the main portrait by accessing the main portrait from the backside of the substrate (for example by means of milling, drilling or sanding), the forgers will have to cross the security portion of the antenna. By crossing the security portion of the antenna, the antenna in the security portion is damaged. As a consequence, the wireless communication between the antenna and the reader device is disabled. Accordingly, the present disclosure is based on the idea to position the antenna and the portrait portion in the substrate such that, when the substrate positioned between the portrait portion and the backside of the substrate is removed to manipulate the main portrait, the security portion of the antenna is damaged, for example cut, and wireless communication between the antenna and the reader device is disabled. Manipulating the main portrait may for example refer to a replacement, a change or an alteration of the main portrait. A disabled communication in this context means that the communication between the integrated circuit of the identification document and the respective reader device is not possible anymore or is at least impaired, such that authorities who verify the genuineness of the identification document are alerted that further examination of the identification document is needed.

The wireless communication may be disabled because the resonance frequency of the antenna changes due to the damaged security portion of the antenna or the flow of current in the antenna is interrupted due to the damaged security portion of the antenna. Damage of the security portion may for example refer to a cut or a breaking of the security portion.

The antenna may be made of copper. Other examples for the material of the antenna include copper-nickel alloys (e.g., CuNi6).

The substrate may for example be made of Polycarbonate (PC), PVC, Teslin or TPU and may be formed of multiple layers stacked on each other using standard techniques which are well known in the industry. In an embodiment having multiple layers, the portrait portion may be arranged on a first layer of the multiple layers and the antenna may be arranged on a second layer of the multiple layers such that at least a security portion of the antenna is positioned between the portrait portion and the backside of the substrate and overlaps the security portion, when viewed from the backside in the thickness direction.

In an exemplary embodiment, the antenna connected to the integrated circuit forms a closed circuit with the integrated circuit and the closed circuit is broken when the security portion of the antenna is damaged.

When the security portion of the antenna is broken and flow of current is no longer possible such that the integrated circuit loses power and communication between the antenna and the RFID reader ceases. A malfunction of the communication between the identification document and the reader device therefore is an indicator of manipulation of the identification document.

### Shape of the antenna

As described above, the present disclosure is based at least in part on the realization that the antenna does not only function as communication means but also functions as a security means for the main portrait by having a security portion which is positioned between the portrait portion and the backside of the substrate and overlaps the portrait portion. The shape of the antenna in the security portion is crucial as it secures the portrait portion from an attack from the backside. The shape of the security portion may be designed such that the resonance frequency of the antenna matches the required resonance frequency of the wireless communication system (integrated circuit, antenna, reader device). Further, the shape of the security portion may be designed (formed) to sufficiently cover the portrait portion from the back to reliably protect the main portrait against a manipulation attack from the backside. Further, the shape of the security portion may be designed to not be too complex for manufacturing purposes.

According to an exemplary embodiment, the antenna has a wire which is wound in multiple loops, wherein, when viewed in thickness direction, an outer loop of the multiple loops has a shape that surrounds the portrait portion and does not extend in front of the portrait portion, and an inner loop of the multiple loops, which is arranged inside the outer loop, has a shape that at least partly extends in front of the portrait portion to form the security portion of the antenna.

By means of such a shape of the antenna, an outer large loop may be formed utilizing the available space on the substrate and an inner loop may be formed protecting the main portrait against "attacks from the back" (milling, abrading, sanding the main portrait from the back to change/modify it), because the inner loop of the antenna is "in the way" and would be compromised/broken by milling/abrading/sanding.

According to an exemplary embodiment, the antenna has a wire which is wound in multiple loops, wherein, when viewed in thickness direction, each one of the multiple loops has a shape that at least partly extend in front of the portrait portion to form the security portion of the antenna.

By means of such a shape of the antenna, many areas of the portrait portion are covered by the multiple loops and the main portrait will be effectively protected by "attacks from the back" (milling, abrading, sanding the portrait from the back to change/modify it), because the multiple loops of the antenna will be "in the way" and would be compromised/broken by milling/abrading/sanding. The multiple loops may extend in parallel. The multiple loops may be arranged such that the distance between adjacent loops of the multiple loops within the security portion of the antenna is wider than outside of the security portion. For example, the multiple loops may extend in parallel and with a distance between adjacent loops in the range of 150-300 µm (microns) within the security portion of the antenna and with a distance between adjacent loops in the range of 75-300 µm (microns) outside the security portion of the antenna.

According to an exemplary embodiment, the security portion of the antenna has a U-like shape. The U-like shape may correspond to a protruding portion of the antenna that extend over the portrait portion. The security portion may have multiple U-like shapes (protruding portions of the antenna) arranged above each other or beside each other. One or more U-like shapes (protruding portions of the antenna) may be arranged on one or more sides of the portrait portion. The U-like shape may be formed by a single wire or by multiple wires extending in parallel to each other.

According to an exemplary embodiment, the security portion of the antenna has a cross-like shape. The cross-like shape may correspond to a protruding portion of the antenna that extends over the portrait portion. The security portion may have multiple cross-like shapes (protruding portions of the antenna) arranged above each other or beside each other. One or more cross-like shapes (protruding portions of the antenna) may be arranged on one or more sides of the portrait portion. The security portion of the antenna may also have a double cross-like shape, a double cross being a cross with a vertical bar and two crossbars. The cross-like shape or double cross-like shape may be formed by a single wire or by multiple wires extending in parallel to each other.

### Further exemplary embodiments

According to an exemplary embodiment, the substrate further has a first transparent window through which at least part of the security portion of the antenna is visible from the backside.

The antenna of the present disclosure functions as a security means for the main portrait. The security is provided by providing an antenna which has a security portion which is positioned in front of and overlapping the portrait portion. An attempt to manipulate the main portrait from the backside will result in a damaged security portion. As a consequence, wireless communication with the reader device is disabled. By checking whether wireless communication with the reader device is possible, the integrity of the security portion may be checked. Accordingly, the integrity of the security portion may be functionally checked. According to this exemplary embodiment, the integrity of the security portion of the antenna may not only functionally checked but also visually checked. For this reason, a first transparent window is provided in the substrate. Transparent window means that a patch or window is cut out from an opaque layer (e.g., a layer of white polycarbonate) and transparent material (one or more layers) layers over the top, revealing what is underneath the patch or window. Through the first transparent window it is possible to (visually) check whether the security portion of the antenna is damaged such as cut.

The first transparent window may be positioned such that only a part of or the entire security portion of the antenna is visible through the transparent window.

The first transparent window may correspond to multiple transparent windows forming the first transparent window. Through each of the multiple transparent windows, at least a part of the security portion of the antenna is visible.

The first transparent window may be transparent for visible light. The first transparent window may be non-transparent for visible light but transparent for another spectrum of light (transparent for a specific band of wavelengths) such as UV light or IR light.

According to an exemplary embodiment, the security portion of the antenna has an UV coating.

The visual check of the integrity of the antenna may be easier and quicker evaluated for authenticity by border authorities when the security portion of the antenna has an UV coating which can be made visible by means of an UV light source.

In case, the identification document has a first transparent window through which at least part of the security portion of the antenna is visible from the backside, the UV coating of the antenna may be visible through the first transparent window from the backside. By means of an UV light source, the visibility of the security portion may be increased (facilitated).

In case, the identification document does not have a first transparent window through which at least part of the security portion of the antenna is visible from the backside, the UV coating and the material of the substrate may be configured such that by means of an UV light source, the UV coating of the antenna can be make visible through the substrate from the backside.

According to an exemplary embodiment, the identification document further has a security printing such as a QR print or a UV print. The security printing has a portion (further security portion) which is positioned between the portrait portion and the backside of the substrate and which overlaps the portrait portion. In other words, the further security portion is positioned in the substrate such that it overlaps with the portrait portion when viewed from the backside of the substrate in thickness direction of the substrate (i.e., the viewing direction corresponds to the thickness direction of the substrate). Further, the identification document has a second transparent window through which the further security portion of the security printing at least partly is visible from the backside of the substrate.

When trying to manipulate the portrait portion of the identification document and therefore removing substrate positioned between the portrait portion and the backside of the substrate to access the portrait portion, the security portion of the antenna is damaged. In addition, the further security portion of the security printing is damaged. A damaged further security portion of the security printing can be detected by border authorities or others, for example by means of an QR-reader for a damaged QR print, alerting them that the identification document may be manipulated with. Accordingly, this embodiment further increases the security of the identification document as the integrity of the further security portion is an indication of the integrity of the security portion of the antenna. The security printing and the second transparent window may be provided in addition to the first transparent window through which the security portion of the antenna is visible. The second transparent window may be transparent for visible light. The second transparent window may be non-transparent for visible light but transparent for another spectrum of light (transparent for a specific band of wavelengths) such as UV light or IR light.

According to an exemplary embodiment, the first transparent window and the second transparent window may at least partly overlap when viewed in thickness direction and at least part of the security portion of the antenna and at least part of the further security portion of the security printing is visible through the overlapping portion of the first and second transparent window.

The visual check of the integrity of the antenna may be easier and quicker when two different testing options for a visual check are provided within the overlapping portion of the first and second transparent window.

According to an exemplary embodiment, the first transparent window and the second transparent window may correspond to each other, i.e., completely overlap with each other. The further security portion of the security printing may be positioned in front of the security portion of the antenna or behind the security portion of the antenna when viewed from the backside of the substrate in thickness direction.

According to an exemplary embodiment, the security printing is spaced at least 200-400 µm (microns) apart from the backside of the substrate.

Forgers uses an attack from the backside of the substrate to access, alter, and/or remove the main portrait of the holder. In order to access, alter, and/or remove the main portrait, forgers remove the substrate positioned between the portrait portion and the backside of the substrate. The recess (hole) in the substrate created by the removing of substrate is then patched (closed), for example with layers of polycarbonate. If the backside of the substrate has a security printing, the recess (hole) may be closed by including a substrate (layers) with a similar security printing to the original which was provided on the backside of the substrate. The equipment that counterfeiters often use to replicate the damaged security printing (to replicate the pattern of the security pattern) can be quite sophisticated such that the recess (hole) may be closed by the forgers and the original printing pattern (which was provided on the backside of the substrate) may be replicated by the forgers without being easily detected by border authorities or others.

By providing the security printing with an offset to the backside of the substrate of 200-400 µm (microns), the usual methods counterfeiters use for surface printing (such as QR print or UV print) to disguise tampering are not effective such that the manipulation attack becomes obvious and the integrity of the back of the document can be detected by a border authority.

According to an exemplary embodiment, the substrate has multiple layers, the multiple layers being stacked on each other in the thickness direction and the portrait portion is formed on a first layer of the multiple layers, the antenna (at least the security portion of the antenna) is formed on a second layer of the multiple layers and the security printing (at least the further security portion of the security printing) is formed on a third layer of the multiple layers. When viewed from the backside of the substrate, the second and third layer are positioned in front of the first layer. The second layer may be positioned in front of or behind the third layer. There may be other layers of plain transparent material between the mentioned first, second and/or third layer.

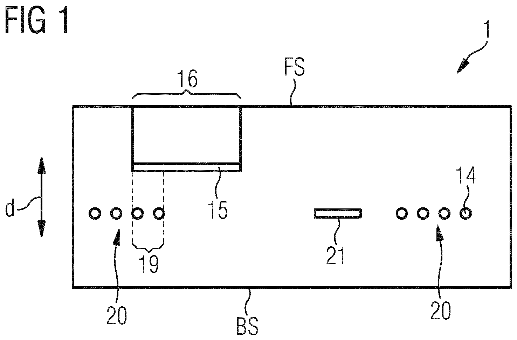

Fig. 1 shows a substrate 1 of an identification document according to an exemplary first embodiment in a sectional view from the side. The identification document shown in Fig. 1 may for example be an identity card. The substrate 1 has a front side FS and a backside BS which is positioned opposite to the front side FS in a thickness direction d of the substrate 1. The substrate 1 has a portrait portion 15 which has the main portrait of the identification document's holder. Through a frontside transparent window 16 the portrait portion 15 is visible from the front side FS of the substrate 1. The substrate 1 further has an integrated circuit 21. An antenna 20 is coupled to the integrated circuit. The antenna 20 has a wire 14 which is wound in four loops around the integrated circuit 21. The four loops are shown in sectional view. The antenna 20 has a security portion 19 which is positioned between the portrait portion 15 and the backside BS of the substrate 1 and overlaps with the portrait portion 15 when viewed from the backside BS in thickness direction d.

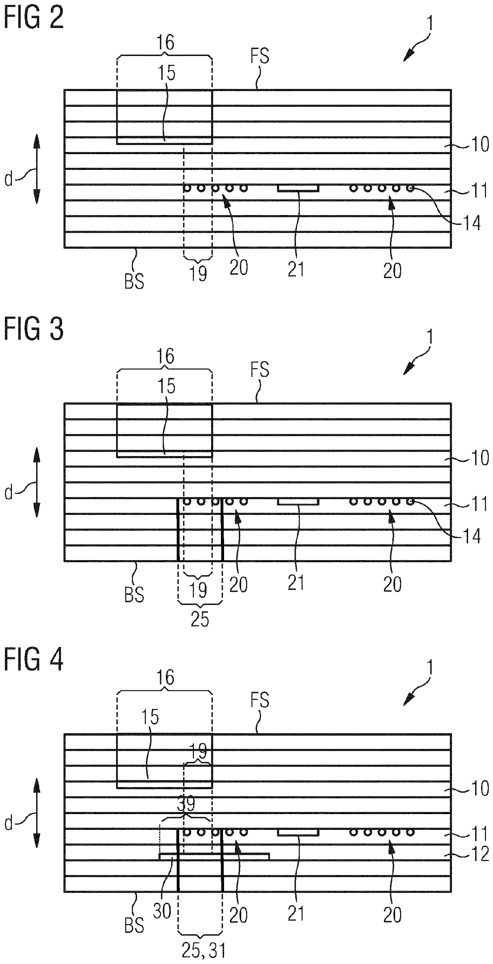

Fig. 2 shows a substrate 1 of an identification document according to an exemplary second embodiment in a sectional view from the side. The substrate 1 has multiple layers 10, 11 (10 layers in total). The multiple layers 10, 11 are stacked on each other in the thickness direction d of the substrate 1. The portrait portion 15 is formed on a first layer 10 of the multiple layers. The integrated circuit 21 and the antenna 20 are formed on a second layer 11 of the multiple layers. Through a frontside transparent window 16 the portrait portion 15 is visible from the front side FS of the substrate 1. The antenna 20 has a wire 14 which is wound in five loops around the integrated circuit 21. The antenna 20 has a security portion 19 which is positioned between the portrait portion 15 and the backside BS of the substrate 1 and overlaps with the portrait portion 15 when viewed from the back side BS in thickness direction d.

Fig. 3 shows a substrate 1 of an identification document according to an exemplary third embodiment in a sectional view from the side. The identification document of Fig. 3 corresponds to the identification of document shown in Fig. 2 but in addition has a first transparent window 25 through which the security portion 19 is visible from the backside BS of the substrate 1.

Fig. 4 shows a substrate 1 of an identification document according to an exemplary fourth embodiment in a sectional view from the side. The identification document of Fig. 4 corresponds to the identification of document shown in Fig. 3 but in addition has a security printing 30. The security printing 30 is formed on a third layer 12 of the multiple layers. The security printing 30 may for example be a QR print or a UV print. The security printing 30 has a further security portion 39 which is positioned between the portrait portion 15 and the backside BS of the substrate 1 and overlaps with the portrait portion when viewed from the backside BS in thickness direction d. Part of the further security portion 39 is visible through the first transparent window 25 from the backside BS. As will be obvious from the entire disclosure, in Fig. 4 the first transparent window 25 corresponds to the second transparent window 31.

Each of Fig. 5-12 schematically illustrates a substrate 1 of an identification document according to the present disclosure in a view from the backside of the substrate 1. The antenna 20 and the portrait portion 15 are displayed in a superimposed manner to illustrate the relative position of the antenna 20 to the portrait portion 15.

In Fig. 5, the antenna 20 has a wire 14 which is wound in four loops. An outer loop 26 of the multiple loops 26, 27 has a shape that surrounds the portrait portion 15 and that does not extend in front of the portrait portion 15. An inner loop 27 of the multiple loops 26, 27, which is arranged inside the outer loop 26, has a shape that partly extends in front of the portrait portion 15 to form the security portion 19 of the antenna 20. The security portion 19 has three U-like shapes which are arranged above each other and extend from the left side to the right side of the portrait portion. The U-like shapes correspond to protruding portions of the inner loop 27 of the antenna 20. The U-like shapes cover much of the portrait portion 15 providing an efficient protection from an attack from the back.

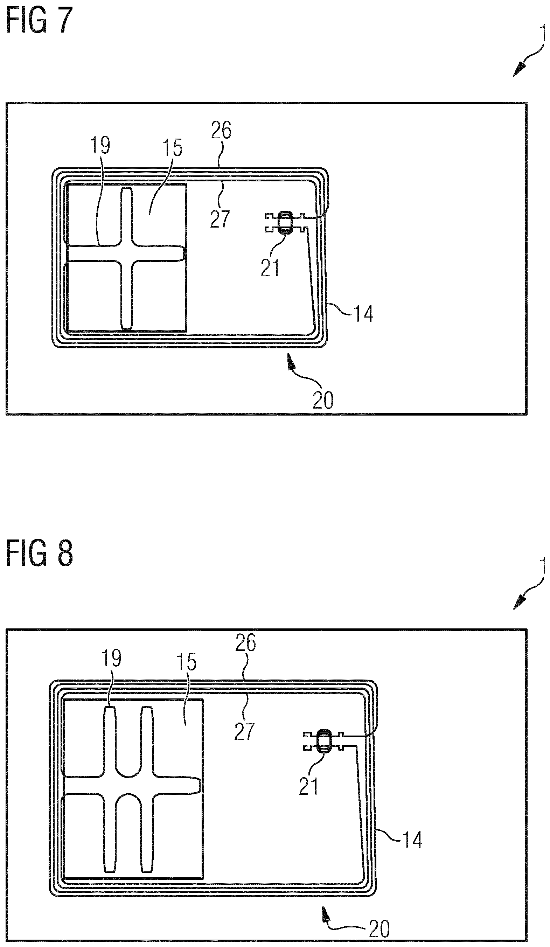

. In Fig. 6, the antenna 20 has a wire 14 which is wound in four loops 26, 27. An outer loop 26 of the multiple loops 26, 27 has a shape that surrounds the portrait portion 15 and that does not extend in front of the portrait portion 15. An inner loop 27 of the multiple loops 26, 27, which is arranged inside the outer loop 26, has a shape that partly extends in front of the portrait portion 15 to form the security portion 19 of the antenna 20. The security portion 19 has four U-like shapes which are arranged beside each other and extend from the bottom to the top of the portrait portion. The U-like shapes are formed by protruding portions of the inner loop 27 of the antenna 20. In Fig. 7, the antenna 20 has a wire 14 which is wound in four loops 26, 27. An outer loop 26 of the multiple loops 26, 27 has a shape that surrounds the portrait portion 15 and that does not extend in front of the portrait portion 15. An inner loop 27 of the multiple loops 26, 27, which is arranged inside the outer loop 26, has a shape that partly extends in front of the portrait portion 15 to form the security portion 19 of the antenna 20. The security portion 19 has a cross-like shape. The cross-like shape is formed by a protruding portion of the inner loop 27 of the antenna 20. The cross-like shape cover much of the portrait portion 15 providing an efficient protection from an attack from the back.

In Fig. 8, the antenna 20 has a wire 14 which is wound in four loops 26, 27. An outer loop 26 of the multiple loops 26, 27 has a shape that surrounds the portrait portion 15 and that does not extend in front of the portrait portion 15. An inner loop 27 of the multiple loops 26, 27, which is arranged inside the outer loop 26, has a shape that partly extends in front of the portrait portion 15 to form the security portion 19 of the antenna 20. The security portion 19 has a double cross-like shape. The double cross-like shape is formed by a protruding portion of the inner loop 27 of the antenna 20.

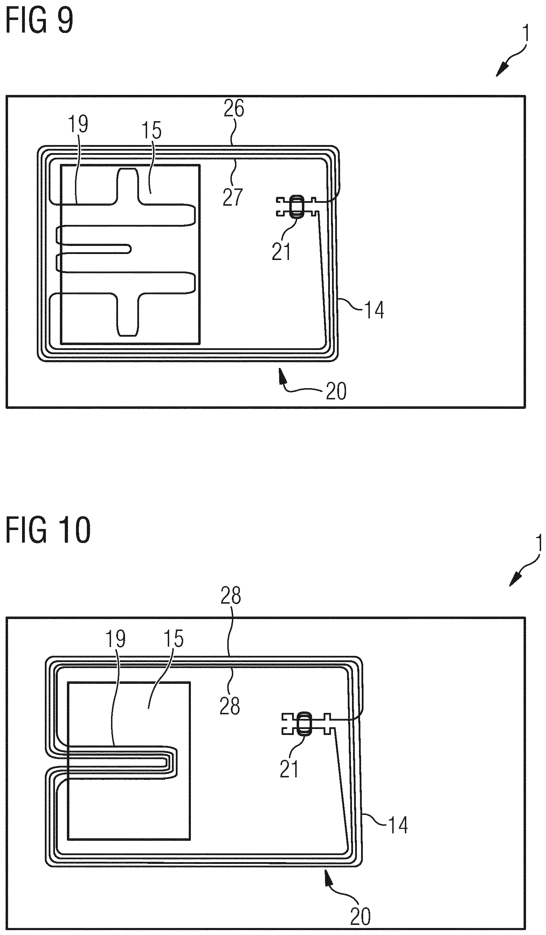

In Fig. 9, the antenna 20 has a wire 14 which is wound in four loops 26, 27. An outer loop 26 of the multiple loops 26, 27 has a shape that surrounds the portrait portion 15 and that does not extend in front of the portrait portion 15. An inner loop 27 of the multiple loops 26, 27, which is arranged inside the outer loop 26, has a shape that partly extends in front of the portrait portion 15 to form the security portion 19 of the antenna 20. The security portion 19 has two T-like shapes arranged above each other and an U-like shape arranged between the two T-like shapes. Each of the two T-like shapes and the U-like shape is formed by a protruding portion of the inner loop 27 of the antenna 20.

In Fig. 10, the antenna 20 has a wire 14 which is wound in four loops 28. The four loops 28 extend in parallel and each one of the four loops 28 has a shape that partly extends in front of the portrait portion 15 to form the security portion 19 of the antenna 20. The security portion 19 has an U-like shape which extends from the left side to the right side of the portrait portion 15. The U-like shape is formed by protruding portions of the four loops 28 of the antenna 20. As each one of the multiple loops has a portion covering the portrait portion, an efficient protection from an attack from the back may be provided.

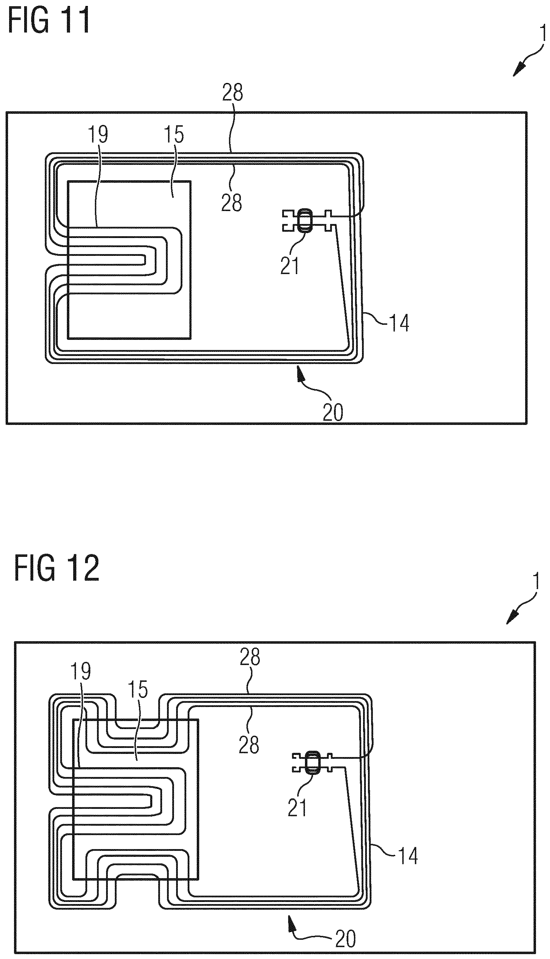

In Fig. 11, the antenna 20 has a wire 14 which is wound in four loops 28. The four loops 28 extend in parallel and each one of the four loops 28 has a shape that partly extends in front of the portrait portion 15 to form the security portion 19 of the antenna 20. The security portion 19 has a U-like shape which extends from the left side to the right side of the portrait portion 15. The U-like shape is formed by protruding portions of the four loops 28 of the antenna 20. The multiple loops 28 are arranged such that the distance between adjacent loops of the multiple loops within the security portion 19 of the antenna is wider than outside of the security portion 19. Due to the wider distance within the security portion, much of the portrait portion 15 is covered by the antenna and an efficient protection from an attack from the back is provided.In Fig. 12, the antenna 20 has a wire 14 which is wound in four loops 28. The four loops 28 extend in parallel and each one of the four loops 28 has a shape that partly extends in front of the portrait portion 15 to form the security portion 19 of the antenna 20. The security portion 19 has three U-like shapes. One U-like shape extends from the left side to the right side of the portrait portion 15. Another U-like shape extends from the top side to the bottom side of the portrait portion 15. Another U-like shape extends from the bottom side to the top side of the portrait portion 15. The U-like shapes are formed by protruding portions of the multiple loops 28 of the antenna 20.

Fig. 13 schematically shows a substrate 1 of an identification document according to a further exemplary embodiment in a view from the backside of the substrate 1. The antenna 20 has a security portion 19 which is positioned in front of and overlapping with the portrait portion 15 when viewed from the backside BS in thickness direction d. The substrate 1 further has a first transparent window 25 through which a part of the security portion 19 of the antenna 20 is visible from the backside. The substrate 1 further has a security printing 30. The security printing 30 has a further security portion 39 which is positioned in front of and overlapping with the portrait portion 15 when viewed from the backside in thickness direction. The substrate has a second transparent window 31 through which the further security portion 39 of the security printing 30 is visible from the backside BS of the substrate 1. The first and second transparent window 25, 31 are not overlapping with each other when viewed in thickness direction.

Fig. 14 schematically shows a substrate 1 of an identification document according to a further exemplary embodiment in a view from the backside of the substrate 1. The embodiment corresponds to the embodiment shown in Fig. 13. However, the substrate 1 has a first and second transparent window 25, 31 which overlap with each other when viewed in thickness direction d. Through the overlapping portion of the first and second transparent window 25, 31 part of the security portion 19 of the antenna 20 and the further security portion 39 of the security printing 30 is visible.

### List of references

- 1: substrate
- 10: first layer of substrate
- 11: second layer of substrate
- 12: third layer of substrate
- 14: antenna wire
- 15: portrait portion
- 16: front side transparent window
- 19: security portion
- 20: antenna
- 21: integrated circuit
- 25: first transparent window
- 26: outer loop
- 27: inner loop
- 28: multiple loops
- 30: security printing
- 31: second transparent window
- 39: further security portion of security printing

- FS: front side of the substrate
- BS: backside of the substrate
- d: thickness direction of the substrate

## Claims

1. An identification document comprising:
- a substrate (1) having a front side (FS) and a backside (BS) opposite to the front side (FS) in a thickness direction (d) of the substrate (1),
- a portrait portion (15) comprising a main portrait of the identification document's holder and located in the substrate (1) such that the main portrait is at least partly visible from the front side (FS), and
- an antenna (20) embedded in the substrate (1) and configured to be coupled to an integrated circuit (21) and to wirelessly communicate with a reader device,
wherein a security portion (19) of the antenna (20) is positioned between the portrait portion (15) and the backside (BS) of the substrate (1) and overlaps with the portrait portion (15).

2. The identification document according to any one of the preceding claims, wherein the substrate (1) further comprises the integrated circuit (21) to which the antenna (20) is coupled.

3. The identification document according to any one of the preceding claims, wherein the substrate (1) comprises multiple layers (10, 11), the multiple layers (10, 11) being stacked on each other in the thickness direction (d).

4. The identification document according to any one of the preceding claims, wherein the antenna (20) is formed by a wire (14) such as a copper wire.

5. The identification document according to any one of the preceding claims, wherein the antenna (20) comprises a wire (14) which is wound in multiple loops (28), wherein, when viewed in thickness direction (d),
i) an outer loop (26) of the multiple loops has a shape that surrounds the portrait portion (15) and does not extend in front of the portrait portion (15), and
ii) an inner loop (27) of the multiple loops, which is arranged inside the outer loop (26), has a shape that at least partly extends in front of the portrait portion (15) to form the security portion (19) of the antenna (20).

6. The identification document according to any one of claims 1-4, wherein the antenna (20) comprises a wire (14) which is wound in multiple loops (28), wherein, when viewed in thickness direction (d),
i) each one of the multiple loops (28) has a shape that at least partly extends in front of the portrait portion (15) to form the security portion (19) of the antenna (20).

7. The identification document according to any one of the preceding claims, further comprising:
a first transparent window (25) through which at least part of the security portion (19) of the antenna (20) is visible from the backside (BS).

8. The identification document according to any one of the preceding claims, wherein the security portion (19) of the antenna comprises an UV coating.

9. The identification document according to any one of the preceding claims, further comprising:
a security printing (30) such as a QR print or a UV print, the security printing (30) comprising a further security portion (39) which is positioned between the portrait portion (15) and the backside (BS) of the substrate (1) and overlaps the portrait portion (15), and
a second transparent window (31) through which the further security portion (39) of the security printing (30) at least partly is visible from the backside (BS) of the substrate (1).

10. The identification document according to claim 9, wherein the first transparent window (25) and the second transparent window (31) at least partly overlap when viewed in thickness direction and at least part of the security portion (19) of the antenna (20) and at least part of the further security portion (39) of the security printing (30) is visible through the overlapping portion of the first and second transparent window (25, 31).

11. The substrate (1) according to any one of claims 9 to 10, wherein the security printing (30) is spaced at least 200 - 400 µm apart from the backside (BS) of the substrate (1).

12. The substrate (1) according to any one of claims 9 to 11, wherein the substrate (1) comprises multiple layers (10, 11, 12), the multiple layers being stacked on each other in the thickness direction (d) and the portrait portion (15) is formed on a first layer (10) of the multiple layers, the security portion (19) of the antenna (20) is formed on a second layer (11) of the multiple layers and the further security portion (39) of the security printing (30) is formed on a third layer (12) of the multiple layers.

13. A method for manufacturing an identification document, the method comprising:
providing a substrate (1) having a front side (FS) and a backside (BS) opposite to the front side (FS) in a thickness direction (d) of the substrate (1), providing a portrait portion (15) comprising a main portrait of the identification document's holder, and locating the portrait portion (15) in the substrate (1) such that the main portrait is at least partly visible from the front side (FS),
embedding an antenna (20) in the substrate (1), the antenna (20) being configured to be coupled to an integrated circuit (21) and to wirelessly communicate with a reader device, and
positioning the antenna (20) in the substrate (1) such that a security portion (19) of the antenna (20) is positioned between the portrait portion (15) and the backside (BS) of the substrate (1) and overlaps with the portrait portion (15).

14. The method according to claim 13, further comprising:
providing a first transparent window (25) in the substrate (1) through which at least part of the security portion (19) of the antenna (20) is visible from the backside (BS).

15. The method according to claim 13 or 14, further comprising:
providing a security printing (30) such as a QR print or a UV print in the substrate (1),
positioning the security printing (30) in the substrate (1) such that it comprises a further security portion (39) which is positioned between the portrait portion (15) and the backside (BS) of the substrate (1) and overlaps the portrait portion (15), and
providing a second transparent window (31) in the substrate (1) through which at least part of the further security portion (39) of the security printing (30) is visible from the backside (BS) of the substrate (1).
